# FASCICULE DE BREVET EUROPEEN

(11) **EP 4 070 757 B1**
(45) Date de publication et mention de la délivrance du brevet: **15.05.2024**
(21) Numéro de dépôt: 22166817.1
(22) Date de dépôt: 05.04.2022
(51) Int. Cl.: A61C 7/00, B33Y 10/00

(54) **MODÉLISATION PRÉVISIONNELLE DE RÉFÉRENCE ET PROCÉDÉS DE CONCEPTION, FABRICATION ET RÉPARATION D'UN APPAREIL D'ORTHODONTIE LINGUALE AVEC CETTE MODÉLISATION PRÉVISIONNELLE**
PRÄDIKTIVE REFERENZMODELLIERUNG UND VERFAHREN ZUR PLANUNG, HERSTELLUNG UND REPARATUR EINER LINGUALEN KIEFERORTHOPÄDISCHEN APPARATUR MIT DIESER PRÄDIKTIVEN MODELLIERUNG
REFERENCE PREDICTIVE MODELLING AND METHODS FOR DESIGNING, MANUFACTURING AND REPAIRING A LINGUAL ORTHODONTIC DEVICE WITH SAID PREDICTIVE MODELLING

(30) Priorité: 08.04.2021 FR 2103616
(43) Date de publication de la demande: 12.10.2022
(73) Titulaire: Lecocq, Guillaume, 58300 Valenciennes (FR)
(72) Inventeur: Lecocq, Guillaume, 58300 Valenciennes (FR)
(74) Mandataire: Corret, Hélène

(56) Documents cités:
- CN-B- 106 821 520
- JP-A- 2012 066 016
- US-B1- 6 736 638

## Description

L'invention concerne le domaine technique de l'orthodontie linguale et plus particulièrement la conception, la fabrication et la réparation d'un appareil d'orthodontie linguale.

Un appareil d'orthodontie linguale est conçu pour être placé sur les dents de la mâchoire d'un patient présentant une malocclusion de façon à obtenir un alignement des dents et particulièrement des faces labiales, en prenant appui sur la face linguale des dents.

Il comporte classiquement des attaches reliées par un fil métallique avec lequel le praticien exerce une tension différenciée au cours du traitement.

Ce type d'appareil présente l'avantage d'être plus esthétique qu'un appareil d'orthodontie vestibulaire ou labiale puisque les attaches linguales, collées derrière les dents, ne sont pas visibles.

En revanche, sa conception est plus complexe que celle d'un appareil vestibulaire. En effet, la surface linguale des dents est plus complexe que leur surface labiale. Elle est, en pratique, spécifique à chaque patient et unique pour chaque dent. Il est donc nécessaire d'individualiser ou de personnaliser les attaches afin de les adapter à la surface linguale des dents du patient.

Au contraire, il a été établi par les travaux d'Andrews (Straight wire, the concept and appliances- Editions Lawrence F. Andrews, San Diego, 1989 et The six éléments of orofacial harmony-Andrews Journal, vol 1, N°1 :13-24, 2000) que, pour une dent de même nature (l'incisive centrale, l'incisive latérale, la canine...), la variation du galbe de cette dent d'un individu à l'autre est en moyenne de 2°. Ont donc été développées des attaches labiales pré-informées standardisées qui contiennent les informations de galbe et d'orientation de la face labiale spécifiques à chaque nature de dent et qui sont depuis lors systématiquement utilisées lors de la conception d'appareil d'orthodontie labiale.

Par ailleurs, les travaux d'Andrews ont également établi que ces attaches standardisées pouvaient toutes être fixées à la même hauteur, correspondant au milieu de la hauteur dentaire de la face labiale de chaque dent. En conséquence, un arc également standardisé droit, c'est-à-dire plat, continu et sans pliage peut être utilisé.

Ces travaux ont donc permis de simplifier considérablement la conception des appareils d'orthodontie labiale, en exploitant la quasi-uniformité du galbe labial des dents d'un patient à l'autre.

Le document CN106821520 illustre une technique de conception d'un appareil d'orthodontie labiale qui utilise de telles attaches standards fixées au milieu de la hauteur de chaque dent et un arc également standard, plat et sans pliage, dont la forme est simplement adaptée par le praticien selon la forme qu'il veut donner à la mâchoire. Ce document ne prévoit aucun dépôt de composite entre les attaches et les dents, puisque les attaches sont au préalable adaptées au galbe des dents.

Les techniques utilisées en orthodontie labiale ne sont pas transposables en orthodontie linguale et ce, pour plusieurs raisons.

L'orthodontie ayant pour objectif d'aligner les faces labiales, lorsque l'appareil est attaché directement sur ces surfaces labiales avec des attaches pré-informées, il est au plus proche de la zone à contrôler. Au contraire, en orthodontie linguale, l'appareil est éloigné des surfaces labiales à aligner. Les différences d'épaisseur entre les dents ne permettent pas d'utiliser un arc droit : l'arc présente nécessairement des pliages pour compenser les variations d'épaisseur des dents entre les faces labiales à aligner et les faces linguales sur lesquelles l'attache est collée.

Par ailleurs, l'anatomie des surfaces linguales présente de nombreux reliefs : ce n'est pas une surface lisse galbée comme du côté labial. En outre, l'anatomie linguale pour une même nature de dent est trop variable d'un individu à l'autre. Et, au sein d'une même arcade d'un patient, les variations des surfaces linguales sont très différentes entre deux dents voisines.

Du fait de la variabilité très forte des faces linguales, il n'est pas possible de créer des attaches linguales standardisées pré-informées.

Il n'est pas non plus possible de déterminer le milieu de la face linguale comme hauteur commune pour le collage comme pour un appareil labial car la hauteur des faces linguales varie très fortement d'une dent à l'autre au sein d'une même arcade.

C'est pourquoi, un procédé de conception d'un appareil d'orthodontie linguale doit permettre d'individualiser ou de personnaliser des attaches, de créer un arc spécifique et de fixer les attaches à une hauteur individualisée pour chaque dent, ce que ne permet pas un procédé de conception d'un appareil d'orthodontie labiale.

Par définition, la personnalisation est réalisée en créant des attaches spécifiques à chaque dent du patient par CFAO ou usinage, tandis que l'individualisation est réalisée en utilisant des attaches du commerce et en ajustant l'épaisseur d'un matériau de comblement durcissable entre chaque attache et chaque dent. Ce matériau de comblement peut classiquement être par exemple un composite, une colle de type résine ou encore un ciment verre-ionomère.

De nombreuses techniques ont déjà été proposées pour la réalisation d'appareils d'orthodontie linguale pour tenir compte des spécificités de la surface linguale des dents.

Elles utilisent comme point de départ un modèle de malocclusion, c'est-à-dire un modèle de la partie dentée de la mâchoire du patient, obtenu à partir d'une empreinte physique ou d'une empreinte optique. Il s'agit donc du modèle de l'arcade dentaire supérieure et / ou inférieure.

On rappelle ici que, de façon classique, une empreinte physique est une représentation matérielle et en négatif d'une partie de la mâchoire, tandis qu'une empreinte optique est une image 3D numérique, par exemple obtenue grâce à un scanner intra-oral.

Un modèle est une représentation positive d'une partie de la mâchoire qui peut être physique ou virtuel. Ainsi, un modèle physique peut être obtenu par coulée par exemple en plâtre d'une empreinte physique préalablement réalisée ou par impression à partir d'une empreinte optique. Un modèle virtuel pourra être réalisé à partir d'une empreinte optique ou encore à partir d'un modèle physique scanné.

Ces techniques prévoient ensuite de créer, à partir du modèle de malocclusion, une modélisation prévisionnelle (classiquement dénommée set-up dans la terminologie anglo-saxonne) qui concrétise la position thérapeutique des dents telle que souhaitée par le praticien en fin de traitement.

Une première technique de réalisation de l'appareil lingual est basée sur une individualisation des attaches et consiste à réaliser tout d'abord, à partir d'un modèle de malocclusion physique, une modélisation prévisionnelle ou set-up, également physique.

À partir de cette modélisation prévisionnelle, ou set-up, physique et de dessins, le praticien conçoit un arc dentaire orthodontique. Cet arc est réalisé à partir d'un fil métallique et il est muni d'attaches du commerce. Cet arc s'étend dans un plan, car toutes les attaches doivent être collées sur les dents à la même hauteur (par rapport au plan d'occlusion).

Le praticien place ensuite l'ensemble sur la modélisation prévisionnelle et modifie la forme de l'arc par tâtonnements successifs, afin d'ajuster sa forme à la modélisation prévisionnelle.

Il est alors difficile de réaliser cet ajustement, car c'est l'ensemble de la forme de l'arc qu'il faut alors reprendre. En effet, toute modification d'une portion de l'arc se répercute sur les autres portions de l'arc et modifie donc l'ensemble de la forme de l'arc.

Également, il est fréquent que l'arc soit positionné de manière inclinée par rapport au plan d'occlusion, car, pour chaque modification de l'arc, le praticien repositionne l'arc sur la modélisation prévisionnelle à main levée, de manière arbitraire et approximative, sans référence et donc de manière non fiable et non reproductible.

Dans la mesure où les attaches utilisées ne sont pas spécifiques au patient, il est nécessaire de réaliser des coussins de matériau de comblement, par exemple une résine, entre chaque attache et la dent correspondante de la modélisation prévisionnelle.

Pour cela, le praticien stabilise l'arc au mieux grâce à des tiges qui sont, à une extrémité, enfoncées dans une masse de cire et à l'autre extrémité, supportent des crochets clipsés sur l'arc. Le praticien dépose ensuite la résine sur les attaches et procède à une polymérisation pour que les coussins de résine se fixent sur les attaches. Ces tiges ont donc pour fonction de maintenir en position les attaches par rapport aux dents et ce, de façon transitoire, et elles sont mises en place de manière empirique, après le positionnement des attaches et de l'arc sur la modélisation prévionnelle physique.

Le praticien procède ensuite à un transfert des attaches, munies chacune de leur coussin de résine, dans la bouche du patient. Un fil passant par chaque attache sera ensuite placé par le praticien pour obtenir un appareil lingual.

Cette première technique est par exemple illustrée par le document JP 2012066016 qui décrit des supports formés d'un anneau et d'une assise en résine dans laquelle l'arc est inséré avant qu'elle ne soit polymérisée.

Cette technique présente l'avantage d'utiliser des attaches du commerce qui présentent un coût bien inférieur à celui d'attaches dites personnalisées, car réalisées sur mesure.

On constate cependant que, du fait du positionnement imprécis de l'arc, l'appareil est éloigné des dents, ce qui génère la présence des coussins de résine épais et plus fragiles. En effet, cet éloignement augmente les risques de rupture du fait des efforts auxquels l'appareil est soumis.

Par ailleurs, il est pratiquement impossible de réparer une attache décollée.

En effet, si une attache de l'appareil est perdue, une nouvelle attache doit être fixée, et ce, dans la même position que celle de l'attache initiale.

II serait donc nécessaire de refaire le montage partiellement et de réutiliser l'arc qui a servi à réaliser l'appareil, de placer la nouvelle attache sur cet arc et de repositionner ce dernier sur la modélisation prévisionnelle dans la position qui était la sienne lors de la réalisation des coussins de résine.

Or, toutes ces étapes s'avèrent impossibles à réaliser. En effet, l'arc est le plus souvent détérioré lors de la fixation des tiges de stabilisation et de sa manipulation lors du retrait des attaches pendant le montage : l'arc devient difficilement réutilisable. Par ailleurs, le repositionnement de l'arc grâce aux tiges de stabilisation manque de la précision nécessaire.

Également, le fil ayant servi à la création de l'appareil est totalement inutilisable pour les phases cliniques. Le praticien ne peut donc que reproduire au mieux la forme du fil ayant servi à créer l'appareil, ce qui crée une imprécision supplémentaire.

Lorsque l'accumulation de ces imprécisions ne permet pas d'atteindre les objectifs fixés, il devient nécessaire de réaliser un nouvel appareil, ce qui est coûteux pour le patient.

Une autre technique met en oeuvre des outils numériques pour fournir au praticien un appareil lingual adapté à la dentition du patient et qui peut être posé en bouche, sans que le praticien n'ait à procéder à des phases d'ajustements de laboratoire. Elle est mise en oeuvre par des prestataires extérieurs auxquels le praticien fournit le modèle de malocclusion.

Cette technique est par exemple illustrée par le document EP2949286.

Elle consiste à réaliser une modélisation prévisionnelle (ou set-up) virtuelle qui peut être obtenue directement à partir du modèle de malocclusion virtuel, ou à partir d'une modélisation prévisionnelle physique qui est ensuite scannée.

Des attaches spécifiques à chaque dent sont ensuite conçues et l'arc est réalisé par pliage d'un fil métallique. Ce pliage est nécessairement réalisé par un robot, compte tenu de la complexité de l'arc, des nombreux décrochements et de la précision exigée. Ces arcs sont dits multi-pliés (multibend archwire), car le robot est programmé pour réaliser un pliage pour chaque attache et un pliage pour chaque espace entre deux attaches, créant ainsi par exemple 27 segments à plier sur la longueur de l'arc.

La structure formée de l'arc et des attaches est fournie au praticien qui réalise, là encore, un transfert des attaches dans la bouche du patient. Un fil passant par chaque attache sera ensuite placé par le praticien pour obtenir un appareil lingual.

Ce fil, comme tous ceux qui seront utilisés par le praticien au cours du traitement sont également fournis par les prestataires extérieurs.

Cette technique devrait présenter l'avantage d'une grande précision. Cependant, l'inventeur a constaté que paradoxalement, une conception purement virtuelle peut aboutir à un appareil qui n'est pas bien adapté au patient.

En effet, la préparation virtuelle de l'appareil doit permettre la réalisation d'un appareil réel physique constitué d'un arc, d'attaches et du setup. Le passage du virtuel au réel est donc le moment critique du processus, car la précision de la manipulation virtuelle doit se retrouver lors de la réalisation physique de l'appareil lingual. Or, il existe toujours une variation et une tolérance industrielle, lors du passage au réel de chacun des éléments. Ainsi, l'arc physique a une forme très proche, mais pas strictement identique à la forme de l'arc virtuel introduisant de facto un biais entre la forme idéale virtuelle et la forme réelle utilisée en clinique. De même, la section de l'arc virtuel est parfaitement dimensionnée, mais l'arc réel n'a pas la dimension précise et exacte de l'arc virtuel : l'arc utilisé est systématiquement sous-dimensionné lors de sa fabrication industrielle. Également, les attaches ont une morphologie très proche des attaches conçues virtuellement, mais inexacte car moins précise que leur morphologie virtuelle, et les gorges des attaches sont surdimensionnées industriellement pour permettre l'insertion plus facile de l'arc pourtant déjà sous-dimensionné.

Finalement, le positionnement des attaches se fait virtuellement sur le setup puis sur le modèle de malocclusion, ce qui permet la conception virtuelle de la gouttière de transfert. Mais lorsque les attaches sont repositionnées physiquement dans la gouttière de transfert imprimée en 3D, il existe une imprécision, car les logements prévus pour les attaches dans la gouttière imprimée en 3D sont plus grands que les attaches elles-mêmes pour rendre possible le placement manuel des attaches.

Ces indispensables et nécessaires tolérances industrielles créent donc des imprécisions de repositionnement des attaches en clinique. Même si ces imprécisions ne sont pas individuellement importantes, leur cumul peut conduire à une imprécision délétère pour le traitement.

Si c'est le cas, dans la mesure où le praticien ne peut procéder lui-même à aucun ajustement sur la conception de l'appareil, il ne pourra corriger certaines erreurs qu'en commandant un nouvel appareil, entier ou partiel, contenant les ajustements nécessaires, ce qui est coûteux pour le patient.

Si une attache est perdue, le praticien devra recommander une attache spécifique au prestataire extérieur. Ceci impose au patient des délais d'attente et des coûts supplémentaires importants. Chaque attache est conçue comme une demi-couronne qui est adaptée à la forme d'une dent spécifique. La nouvelle attache peut donc reprendre exactement la place de l'ancienne, par effet d'encastrement sur la dent.

Si le fil est cassé, le praticien doit en commander un nouveau, car la complexité des pliages de l'arc l'empêche de réaliser un fil de remplacement suffisamment précis : le praticien est obligé d'avoir recours au robot et à la programmation du robot du prestataire extérieur.

Le praticien est donc très dépendant des prestataires extérieurs, ce qui a des conséquences en termes de coûts et de délais, mais également en termes de précision dans la conception de l'appareil.

L'invention a pour objet de remédier aux techniques connues en proposant un procédé de fabrication d'un appareil d'orthodontie linguale qui est basé sur la conception virtuelle préalable d'un arc muni d'attaches adapté à la dentition d'un patient, ces attaches étant des attaches standards, et d'une modélisation prévisionnelle de référence.

Ceci contribue à l'obtention d'un appareil d'orthodontie linguale dont le coût est réduit par rapport à un appareil basé sur des attaches personnalisées.

On notera que l'utilisation d'attaches standards est permise sans incidence sur la précision de l'appareil, car c'est la méthode de réalisation de l'appareil, et non le choix de l'attache, qui permet d'obtenir la précision et une distance faible entre la surface dentaire et la base de l'attache.

De surcroît, cette modélisation prévisionnelle de référence va permettre au praticien de réparer facilement l'appareil lingual, sans qu'il soit nécessaire de concevoir un nouvel appareil.

Cette possibilité donnée au praticien de réparer l'appareil permet de réduire les coûts pour le patient, ainsi que les délais d'attente avant de disposer de nouveau d'un appareil efficace.

Cette réparation est d'autant plus facile que, de nouveau, des attaches standards seront utilisées.

Par ailleurs, cet arc peut être fabriqué par le praticien et donc adapté par lui.

Le procédé présente donc l'avantage de pouvoir faire intervenir le praticien dans la conception de l'arc, non seulement lors de la définition de la modélisation prévisionnelle, mais également juste avant que les attaches ne soient fixées dans la bouche du patient pour obtenir l'appareil d'orthodontie linguale. Ceci lui permet d'adapter l'appareil conçu virtuellement à la réalité clinique.

Ainsi, l'invention concerne une modélisation prévisionnelle de référence destinée à la conception et/ou la réalisation d'un appareil d'orthodontie linguale pour un patient, comprenant un arc dentaire muni d'attaches, ladite modélisation comprenant une modélisation prévisionnelle établie à partir de la représentation d'au moins une partie de la dentition du patient ainsi qu'au moins deux guides pour ledit arc, un guide antérieur de rétention sagittale et un guide postérieur de rétention transversale, conçus pour assurer le blocage de l'arc dans un premier plan, horizontal ou sensiblement horizontal.

Dans des modes particuliers et/ou avantageux, cette modélisation peut comporter l'une ou l'autre des caractéristiques suivantes :
- Au moins l'un desdits guides est conçu pour assurer également le blocage de l'arc dans un deuxième plan, perpendiculaire ou sensiblement perpendiculaire au premier, qui est vertical ou sensiblement vertical.
- Elle comprend au moins deux guides postérieurs de rétention transversale.
- Elle comprend également au moins un guide d'appui.
- Ledit au moins un guide antérieur de rétention sagittale comporte une face d'appui pour l'arc et des moyens de blocage en position sagittale.
- Ledit au moins un guide postérieur de rétention transversale comporte une fente de blocage en position transversale et verticale.
- Ledit au moins un guide d'appui comporte une face de support pour l'arc.

L'invention concerne aussi un fichier numérique de données correspondant à une modélisation prévisionnelle de référence selon l'invention.

Elle concerne également une modélisation prévisionnelle de référence physique réalisée à partir de ce fichier numérique.

L'invention concerne un ensemble comprenant un arc dentaire orthodontique et une modélisation prévisionnelle de référence selon l'invention, dont les guides sont adaptés audit arc dentaire.

Elle concerne aussi un procédé de conception virtuelle d'un appareil d'orthodontie linguale comprenant un arc muni d'au moins une attache et qui est destiné à un patient, comprenant les étapes suivantes :
- Obtenir une représentation d'au moins une partie de la dentition du patient
- Réaliser une modélisation prévisionnelle virtuelle à partir de cette représentation
- Pour chaque dent de ladite modélisation prévisionnelle virtuelle, sélectionner une attache standard virtuelle et les positionner sur la modélisation prévisionnelle virtuelle
- Définir virtuellement sur ladite modélisation la forme d'un arc dentaire orthodontique adapté à la position desdites attaches une fois positionnées sur ladite modélisation
- Définir virtuellement sur ladite modélisation au moins deux guides dudit arc, un guide antérieur de rétention sagittale et un guide postérieur de rétention transversale, adaptés audit arc
- Réunir virtuellement ladite modélisation prévisionnelle et lesdits guides en un seul objet virtuel formant une modélisation prévisionnelle de référence virtuelle.

Dans des modes particuliers et/ou avantageux, ce procédé peut comporter l'une ou l'autre des caractéristiques suivantes :
- ledit arc et ladite modélisation de référence virtuels sont stockés et/ou transmis sous forme de fichiers numériques.
- La représentation d'au moins une partie de la dentition du patient est virtuelle.
- Ledit arc est défini par segments d'au moins deux dents.
- Est défini sur ladite modélisation au moins un autre guide qui est un guide d'appui.

L'invention concerne également un procédé de fabrication d'un appareil d'orthodontie linguale comprenant un arc dentaire orthodontique muni d'attaches standards, ledit procédé comprenant la mise en oeuvre d'un procédé de conception virtuelle selon l'invention, et les étapes supplémentaires dans lesquelles :
- l'arc est fabriqué à partir de sa définition virtuelle en pliant un fil métallique
- les attaches standards correspondant aux attaches virtuelles précédemment sélectionnées sont fixées sur ledit arc
- les données numériques représentant la modélisation prévisionnelle de référence sont exportées vers un système de fabrication pour obtenir une réalisation physique de ladite modélisation de référence
- l'ensemble de l'arc et des attaches est placé sur la modélisation de référence physique et maintenu grâce aux dits au moins deux guides,
- un matériau de comblement est déposé entre chaque attache et la dent correspondante pour réaliser un coussin d'adaptation à la face linguale de chaque dent et individualiser lesdites attaches.

De façon préférée, avant le dépôt du matériau de comblement, la position des attaches est ajustée pour définir un arc dentaire orthodontique adapté à ladite au moins une partie de la dentition du patient.

L'invention concerne enfin un procédé de réparation d'un appareil d'orthodontie linguale dans lequel au moins une attache est manquante, comprenant les étapes suivantes :
- Obtenir une réalisation physique d'un ensemble selon l'invention comprenant un arc dentaire orthodontique et une modélisation prévisionnelle de référence et correspondant audit appareil, ledit ensemble comprenant un arc dentaire orthodontique et une modélisation prévionnelle de référence
- Placer sur ledit arc ladite au moins une attache standard manquante
- Placer l'arc muni de ladite au moins une attache sur ladite modélisation de référence
- Déposer un matériau de comblement entre ladite au moins une attache et la dent correspondante pour réaliser un coussin d'adaptation à la face linguale de chaque dent et individualiser lesdites attaches.

L'invention sera mieux comprise et d'autres buts, avantages et caractéristiques de celle-ci seront mieux comprises à la lecture de la description qui suit et qui est faite en relation avec les dessins annexés, sur lesquels :
[Fig. 1] illustre un exemple d'un modèle de malocclusion correspondant à l'arcade dentaire inférieure d'un patient.
[Fig. 2] illustre une modélisation prévisionnelle virtuelle obtenue à partir du modèle illustré à la figure 1 et sur laquelle sont placées des attaches standards virtuelles.
[Fig. 3] illustre la modélisation prévisionnelle et les attaches de la figure 2, ainsi qu'un arc et des guides virtuels pour cet arc.
[Fig. 4] est une vue en perspective qui illustre un exemple de guide antérieur de rétention sagittale.
[Fig. 5] est une vue en perspective qui illustre un exemple de guide postérieur de rétention transversale.
[Fig. 6] est une vue en perspective qui illustre un exemple de guide d'appui.
[Fig. 7] illustre l'arc virtuel qui a été isolé de la figure 3.
[Fig. 8] illustre une modélisation prévisionnelle de référence virtuelle obtenue à partir de la modélisation prévisionnelle et des guides illustrés à la figure 3.
[Fig. 9] est une vue en perspective illustrant une réalisation physique de la modélisation prévisionnelle de référence virtuelle illustrée à la figure 8, de l'arc virtuel illustré à la figure 7, ainsi que des attaches virtuelles illustrées à la figure 2.
[Fig. 10] est une vue similaire à la figure 9, sur laquelle sont illustrées des coques en résine formées sur chaque dent.
[Fig. 11] est une vue en perspective du modèle de malocclusion illustré à la figure 1 sur lequel les attaches ont été transférées.
[Fig. 12] est une vue en perspective d'une gouttière de transfert réalisée sur le modèle de malocclusion.
[Fig. 13] illustre la partie inférieure de l'arcade dentaire du patient dans laquelle les attaches de l'appareil lingual conçu selon l'invention ont été transférées.
[Fig. 14] est une vue en perspective illustrant une étape de réparation de l'appareil illustré à la figure 13.
[Fig.15] est une vue panoramique, c'est-à-dire développée à plat, du côté lingual, d'une modélisation prévionnelle définie pour la dentition inférieure d'un patient, sur laquelle sont illustrés des attaches et un arc orthodontique.

Les éléments communs aux différentes figures seront désignés par les mêmes références.

L'invention va être décrite pour la réalisation d'une des deux parties d'un appareil d'orthodontie linguale, ici la partie inférieure. Bien entendu, les mêmes étapes sont mises en oeuvre pour obtenir l'autre partie de l'appareil, sans qu'il soit nécessaire de les décrire en détail.

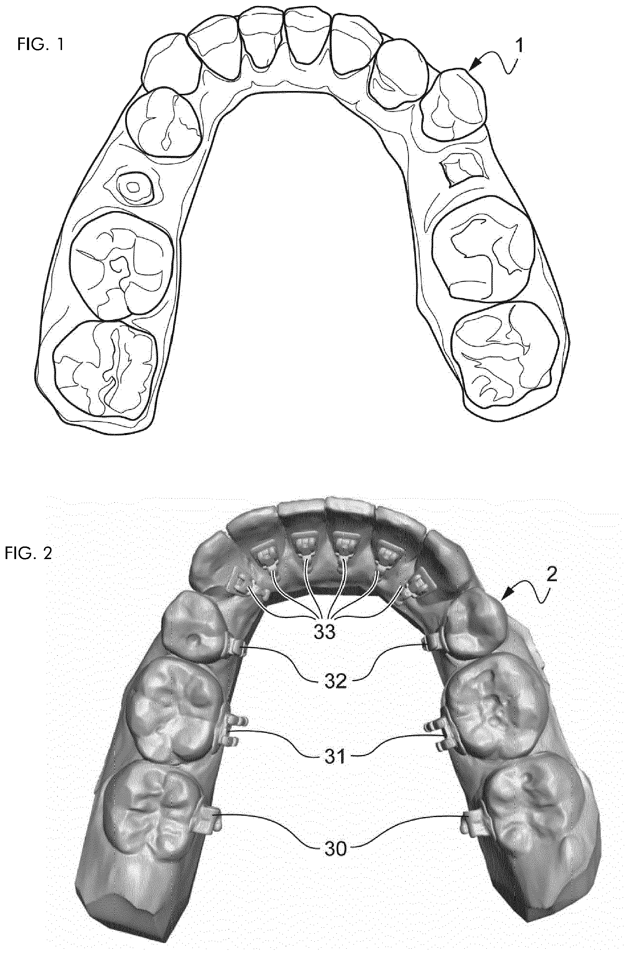

Le modèle de malocclusion 1 illustré à la figure 1 peut classiquement être obtenu de plusieurs manières.

Le praticien peut réaliser une empreinte négative dans la bouche du patient, puis un modèle positif à partir de cette empreinte, modèle par exemple en plâtre. Il peut également réaliser une empreinte optique de la dentition qui est ensuite imprimée en 3D.

Dans tous les cas, à ce modèle de malocclusion 1 correspond un modèle virtuel. Celui-ci résulte directement de l'empreinte optique ou du modèle physique qui est scanné et numérisé.

Le praticien dispose d'un ordinateur avec un écran de visualisation.

À partir du modèle virtuel de malocclusion affiché sur cet écran, le praticien modifie virtuellement la position des dents pour obtenir une modélisation prévisionnelle (set-up) virtuelle qui est le résultat des manipulations virtuelles effectuées par le praticien et qui concrétise la position thérapeutique des dents telle que souhaitée par le praticien en fin de traitement. Il utilise pour cela un logiciel comme celui commercialisé par 3Shape, sous la dénomination OrthoAnalyzer ou par Image Instruments GmbH, sous la dénomination Onyxceph3TM ou encore celui commercialisé par Coruo sous la dénomination Deltaface.

L'invention n'est cependant pas limitée à ce mode de réalisation et cette modélisation prévisionnelle virtuelle pourrait également être obtenue en scannant une modélisation prévisionnelle physique, obtenue en découpant le modèle positif de malocclusion 1 et en réarrangeant les différents morceaux.

Sur la modélisation prévisionnelle virtuelle 2 illustrée à la figure 2, à l'aide d'un logiciel de préparation des données 3D par exemple édité par 3Shape, sous la dénomination OrthoAnalyzer ou par Matérialisé, sous la dénomination Magies, ou encore par la société Mc Neel sous la dénomination Rhino3D, le praticien dispose virtuellement une attache standard pour chaque dent, référencée 30 à 33.

De façon classique, chaque attache comporte une base dont une face est destinée à être en contact avec la face linguale d'une dent du patient et un corps d'attache qui est fixé sur l'autre face de la base. Ce corps comporte une gorge qui est destinée à recevoir un fil orthodontique après que l'attache a été fixée sur la dent du patient.

Ces attaches standards virtuelles sont disponibles dans une bibliothèque mise à disposition par leur fabricant et ici stockée dans la mémoire de l'ordinateur. Le praticien choisit celle qui est le mieux adaptée à chaque dent. De telles attaches standards sont par exemple commercialisées par Ormco, sous les dénominations STB et ALIAS, ou par GC Orthodontics sous la dénomination EXPERIENCE L ou EXPERIENCE L LSB, par Dentaurum sous la dénomination DISCOVERY DELIGHT, ou par RS MEDICO sous la dénomination ORJ Lingual Bracket, par TOMY sous la dénomination Clippy-L, ou par DTC Orthodontics sous la dénomination ORG Lingual Bracket.

De façon classique, la contrainte suivante doit être respectée : la distance des attaches par rapport à la surface linguale doit être la plus réduite possible.

Par ailleurs, la hauteur à laquelle chaque attache est située peut varier d'une dent à l'autre.

Bien entendu, la conception est simplifiée si toutes les attaches sont situées dans un même plan qui peut être parallèle au plan occlusal ou incliné par rapport à celui-ci.

À partir du positionnement des attaches, le praticien définit virtuellement un arc, celui-ci passant par toutes les gorges des attaches.

Dans une variante, le praticien définit en même temps la position de l'arc et des attaches par segment de plusieurs dents.

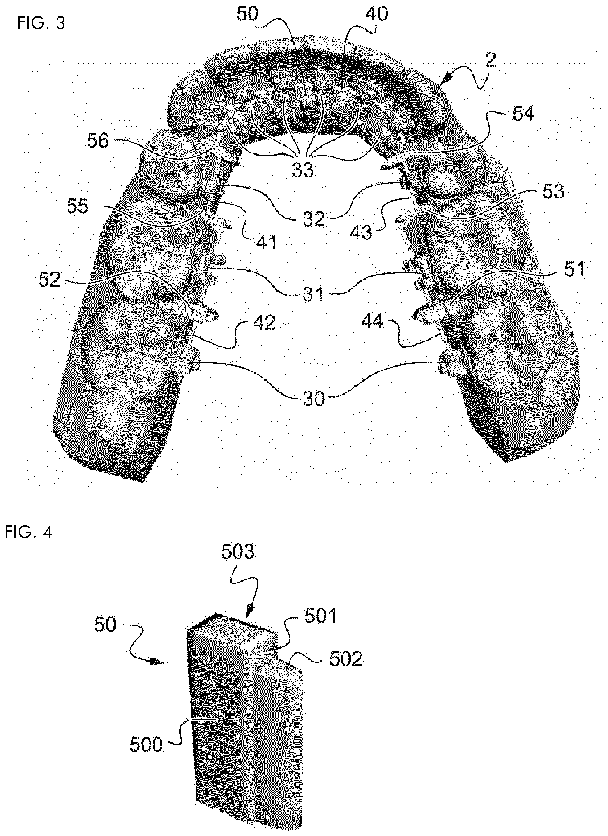

Dans l'exemple illustré à la figure 3, l'arc 4 comporte cinq segments : un segment antérieur 40, deux segments postérieurs gauches 41 et 42 et deux segments postérieurs droits 43 et 44.

La forme obtenue est une forme classique dite « en champignon », dans laquelle la courbure est identique de canine à canine, les secteurs prémolo-molaires étant droits et uniformes.

Elle présente l'avantage de pouvoir être donnée manuellement à un fil métallique pour obtenir un arc orthodontique physique (ou matériel, par opposition à l'arc virtuel), alors que cela est plus difficile lorsque les pliages sont multiples et nécessitent l'utilisation et la programmation d'un robot.

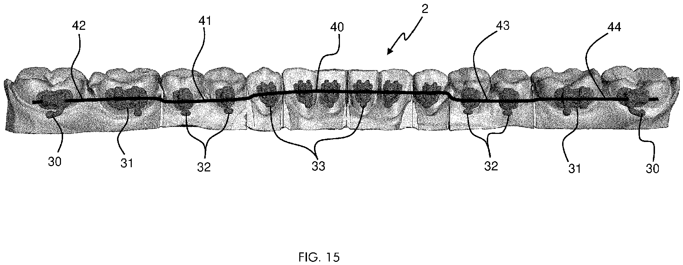

Il est également fait référence à la figure 15 qui montre un exemple de positionnement d'attaches sur la hauteur de la face liguale des dents. Cette figure montre qu'ici, la position de l'arc 4 et des attaches 30 à 33 est définie par segment 40 à 44 d'au moins deux dents et que leur position sur la hauteur de la face linguale des dents varie d'un segment à l'autre.

Le praticien définit également virtuellement au moins deux guides pour l'arc, un guide antérieur de rétention sagittale 50, c'est-à-dire un guide de blocage pour une dent de devant et un guide postérieur de rétention transversale, c'est-à-dire un guide de blocage pour une dent de côté. Ces deux guides vont assurer un blocage de l'arc dans deux directions non parallèles, définissant un premier plan parallèle au plan occlusal ou incliné par rapport à ce plan. Ce premier plan est sensiblement horizontal.

Dans l'exemple illustré sur la figure 3, deux guides postérieurs de rétention transversale 51 et 52 sont illustrés, mais il en suffirait un seul.

Ces guides de rétention comportent un pilier qui s'étend sensiblement dans un plan perpendiculaire au plan de l'arc.

Comme l'illustre la figure 4, le guide antérieur de rétention sagittale 50 comporte, dans la partie supérieure 503 du pilier 500, un épaulement définissant deux faces d'appui 501 et 502 sensiblement perpendiculaires.

Ce guide 50 est disposé, dans la modélisation, de telle sorte que la face d'appui 501 est en vis-à-vis des dents antérieures ou encore du côté antérieur de la partie supérieure 503. Le guide 50 est également positionné dans la modélisation de telle sorte que la face d'appui 502 est située au niveau du plan de l'arc.

Cette face d'appui 502 peut supporter l'arc 4 qui est bloqué en position sagittale grâce à l'épaulement et plus précisément grâce à la face 501.

Bien entendu, l'invention n'est pas limitée à ce mode de réalisation et le guide 50 pourrait assurer le blocage de l'arc en position sagittale par d'autres moyens.

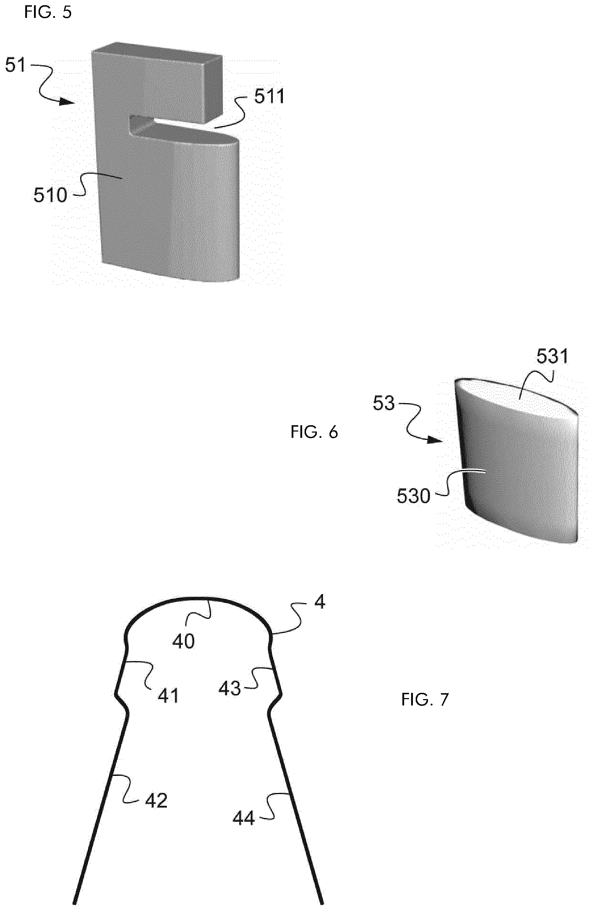

Comme l'illustre la figure 5, le guide postérieur de rétention transversale 51 comporte, dans le pilier 510, une fente 511 transversale. Le guide 51 est positionné dans la modélisation de telle sorte que la fente 511 est située au niveau du plan de l'arc et débouche du côté opposé aux dents. L'arc 4 peut être inséré dans la fente 511 pour le bloquer en position transversale et également dans un deuxième plan, perpendiculaire au premier, c'est-à-dire un plan vertical ou sensiblement vertical. L'arc est alors bloqué en position transversale et verticale.

Le guide 52 est réalisé de façon similaire.

Bien entendu, l'invention n'est pas limitée à ce mode de réalisation et le guide 51 pourrait assurer le blocage de l'arc en position transversale et verticale par d'autres moyens que la fente 511.

Par ailleurs, l'invention n'est pas limitée à cet exemple de réalisation et le guide antérieur de rétention sagittale 50 pourrait également être conçu pour assurer à la fois un blocage de l'arc en position saggitale et dans le deuxième plan, vertical ou sensiblement vertical. Il pourrait alors prendre la forme illustrée à la figure 5.

Dans tous les cas, il est préférable qu'au moins l'un des guides prévus assure le blocage de l'arc dans le deuxième plan, qu'il s'agisse d'un guide antérieur de rétention sagittale ou d'un guide de rétention transversale. Ceci est notamment nécessaire lorsque les attaches ne sont pas toutes prévues à la même hauteur par rapport au plan occlusal.

La figure 3 montre que sont également définis quatre guides d'appui 53 à 56, ces guides étant placés dans la partie antérieure ou postérieure de la dentition.

Ces guides d'appui comportent seulement un pilier.

Ainsi, le guide d'appui 53 illustré à la figure 6 comporte un pilier 530 avec une face supérieure 531. Le guide 53 est positionné dans la modélisation de telle sorte que la face supérieure 531 est située au niveau du plan de l'arc et sert de face d'appui pour l'arc 4.

D'autres modes de réalisation de ces guides d'appui peuvent être envisagés.

Les guides 54 à 56 sont réalisés de façon similaire.

Ces guides d'appui sont préférentiellement prévus, mais le procédé selon l'invention pourrait être mis en oeuvre sans ces guides d'appui.

En pratique, ces guides virtuels sont disponibles dans une bibliothèque préalablement mise à la disposition du praticien et ici stockée dans la mémoire de l'ordinateur.

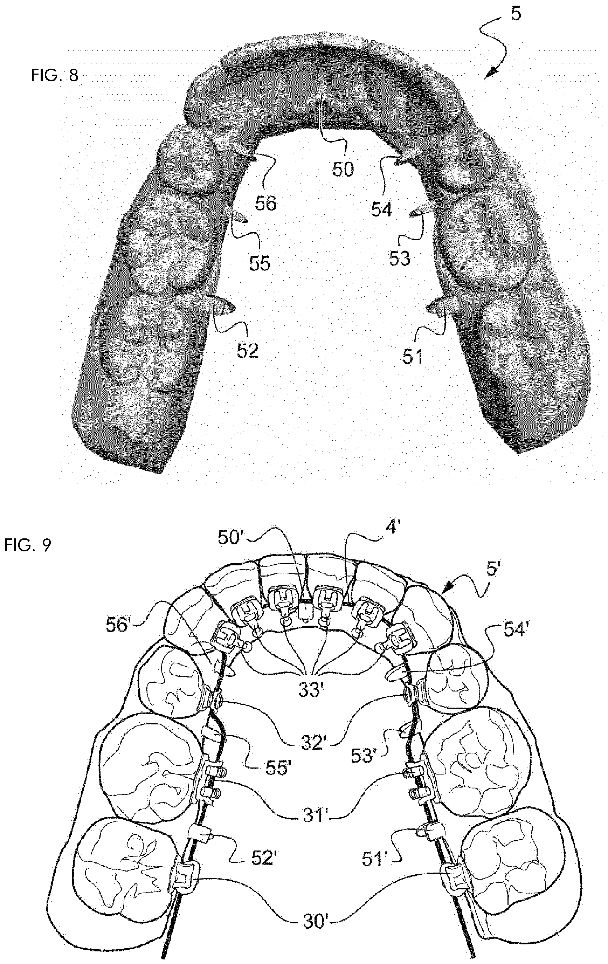

L'étape suivante est illustrée aux figures 7 et 8.

Elle consiste, à partir de tous les éléments illustrés à la figure 3, d'une part à extraire virtuellement l'arc 4 illustré à la figure 7 et d'autre part, à réunir virtuellement la modélisation prévisionnelle 2 et les guides 50 à 56 en un seul objet virtuel formant une modélisation prévisionnelle de référence (ou set-up référentiel) 5 illustrée à la figure 8.

Ces opérations de soustraction et de réunion d'éléments virtuels peuvent notamment être effectuées grâce au logiciel Magies commercialisé par la société Materialise.

Ainsi, l'arc et la modélisation prévisionnelle de référence virtuels peuvent être stockés par exemple dans la mémoire de l'ordinateur sous forme de fichiers de données numériques. Alternativement, ces fichiers peuvent être transmis par un réseau de communication (par exemple Internet) et/ou stockés dans une mémoire amovible (par exemple clé USB) ou une mémoire distante (par exemple serveur de données dans le Cloud).

Bien entendu, l'arc virtuel pourrait également être stocké dans la mémoire de l'ordinateur dès sa conception et notamment, avant la conception des différents guides.

Le format des données numériques peut permettre l'affichage des données sur une interface dédiée pour que le praticien puisse les visualiser. Altenativement ou en combinaison, ce format est interprétable par une machine à commande numérique, telle qu'un robot de fabrication ou une imprimante 3D.

Le praticien procède ensuite à la fabrication de l'appareil lingual destiné au patient, à partir de la conception virtuelle de l'arc et de la modélisation prévisionnelle de référence.

De façon générale, les références utilisées pour désigner un objet virtuel sont conservées pour désigner l'objet matériel ou physique correspondant en ajoutant l'indication « ' ».

Pour cela, il commence par fabriquer l'arc 4' illustré à la figure 9, en pliant un fil métallique suivant le dessin de l'arc 4 tel que défini virtuellement.

De préférence, comme indiqué précédemment, la forme de l'arc est suffisamment simple pour que le praticien puisse réaliser l'arc sans avoir recours à un robot.

Cependant, le recours à un robot est néanmoins possible.

Le fil est un fil classiquement utilisé dans cette application. Il s'agit en général d'un fil pleine taille dont la section est définie par la taille de la gorge de l'attache choisie pour la réalisation de l'appareil. Ici, il est réalisé en un acier de section 0,045 x 0,063 cm (0,018 x 0,025 inch ou pouce) ou 0,045 x 0,045 cm (0,018 x 0,018 inch ou pouce), comme par exemple celui commercialisé par la société Highland Metals, sous la dénomination Stainless Steel, .018x.018, 14" Straight Lengths 14" ou .018x.025, 14" Straight Lengths 14". Il peut également être réalisé avec un fil en alliage titane molybdène de section 0,045 x 0,063 cm (0,018 x 0,025 inch ou pouce) ou 0,045 x 0,045 cm (0,018 x 0,018 inch ou pouce), comme par exemple celui commercialisé par la société Highland Metals, sous la dénomination Beta Titanium Molybdenum, .018x.025, 14" Straight Length ou .018x.018, 14" Straight Length.

Le praticien fabrique ensuite une réalisation physique en volume 5' de la modélisation prévisionnelle de référence 5 (appelée modélisation prévisionnelle de référence physique) qui est illustrée à la figure 9, grâce à un système de fabrication vers lequel les données numériques représentant la modélisation prévisionnelle de référence virtuelle 5 ont été précédemment exportées. Il peut notamment s'agir d'une imprimante 3D.

Cette modélisation prévisionnelle de référence physique comporte donc les guides 50' à 56'.

Il positionne ensuite l'arc 4' sur la modélisation prévisionnelle de référence 5'. Grâce aux guides de cette dernière, ce positionnement correspond exactement à celui prévu lors de la conception virtuelle. Le praticien peut ensuite placer les différentes attaches physiques 30' à 33' sur l'arc 4', la place de chacune d'elles étant dictée par la dent en regard. Ces attaches 30'à 33' correspondent aux attaches virtuelles 30 à 33 précédemment sélectionnées par le praticien.

Le praticien peut également commencer par placer les attaches 30' à 33' sur l'arc 4' en le faisant passer dans la gorge de chaque attache, puis positionner l'ensemble obtenu sur la modélisation prévisionnelle de référence physique 5'.

Là encore, ce positionnement est très précis grâce à la présence des différents guides sur la modélisation prévisionnelle de référence 5'.

Le praticien peut ajuster la position des attaches sur l'arc s'il estime que les positions définies virtuellement doivent être améliorées.

Le résultat obtenu est illustré à la figure 9.

Il procède ensuite au dépôt d'un matériau de comblement classique entre les attaches 30' à 33' et la modélisation prévisionnelle de référence physique 5', de façon à combler les espaces présents entre la base de l'attache et la dent. Ce matériau peut être une résine qui subit enfin une étape de polymérisation pour la durcir.

Les guides de la modélisation prévisionnelle de référence 5' permettent de retrouver avec exactitude l'espace entre les attaches et les dents qui a été défini au cours de la conception virtuelle.

On rappelle en effet que des attaches standards ne peuvent pas être en contact avec la surface linguale des dents du fait de la disparité des reliefs d'une dent à l'autre et d'un patient à l'autre.

Dans le cadre du procédé selon l'invention, cet espace existe donc nécessairement contrairement à des attaches standards d'un appareil labial qui elles, seront en contact direct avec les dents ou à des attaches individualisées pour un appareil lingual car chacune d'elles est conçue pour s'encastrer exactement sur la dent correspondante, aucun matériau de complément n'étant nécessaire.

. Ces guides permettent donc de transposer avec précision, lors de la réalisation matérielle de l'appareil d'orthodontie linguale, les informations acquises lors de la conception virtuelle, de façon à invidualiser les attaches standards.

Il reste maintenant à fixer les attaches, munies de leur coussin de matériau de comblement durci, sur les dents du patient. Elles peuvent être fixées une par une, ou en utilisant une gouttière de transfert.

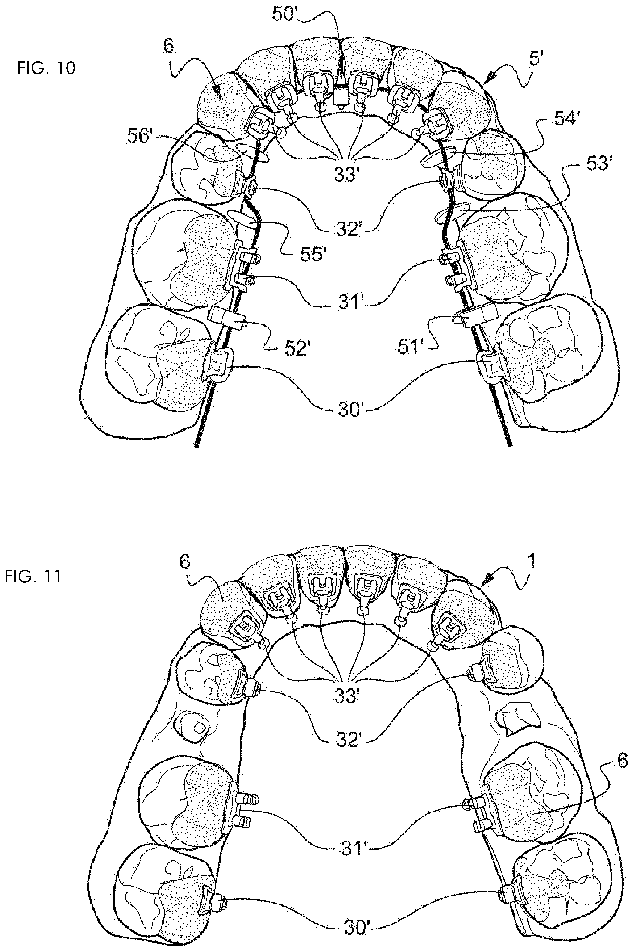

Dans ce deuxième cas, le praticien procède en plusieurs étapes illustrées aux figures 10 à 12.

Comme l'illustre la figure 10, alors que l'arc 4' et les attaches 30' à 33' sont toujours sur la modélisation prévisionnelle de référence 5' (voir figure 9), il commence par réaliser des coques en résine 6 sur chaque dent.

Comme l'illustre la figure 11, il repositionne ensuite chaque attache 30' à 33' sur le modèle physique de malocclusion 1 grâce aux coques en résine 6.

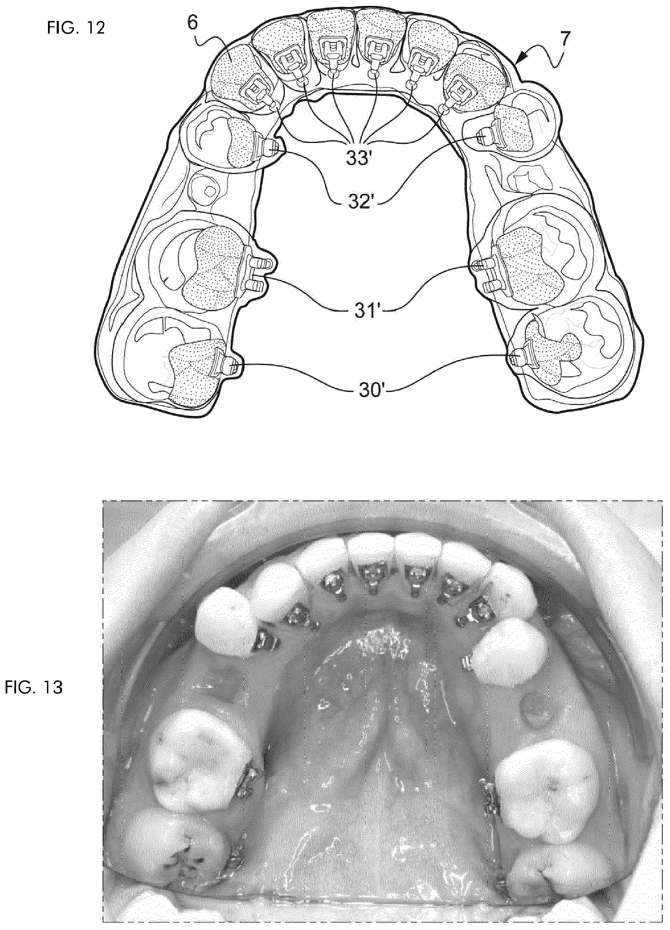

Il crée ensuite une gouttière de transfert 7 (illustrée sur la figure 12) sur le modèle physique de malocclusion 1 avec les attaches 30' à 33'. Les attaches restent alors dans la gouttière qui sert au transfert des attaches sur les dents du patient.

La figure 13 illustre la bouche du patient dans laquelle les attaches ont été transférées.

Le praticien doit enfin faire passer un fil orthodontique métallique dans les gorges des différentes attaches avec lequel il obtiendra une tension adaptée tout au long du traitement.

Au cours du traitement, le fil suit toujours le dessin de l'arc 4 ou 4', mais son alliage constitutif et/ou sa section sont modifiés pour adapter la tension exercée sur les dents. À la fin du traitement, le dernier fil utilisé en clinique sera l'arc 4' qui a été utilisé pour le montage physique des attaches.

Les essais réalisés montrent que l'appareil lingual ainsi obtenu est d'une grande précision et que l'utilisation d'attaches standards individualisées avec les coussins de matériau de comblement ne nuit pas à cette précision.

En effet, le procédé permet d'avoir un contact intime entre la base de l'attache et la surface linguale de la dent ce qui limite l'épaisseur du coussin de matériau de comblement.

De plus, le procédé est fondé sur la réunion physique des trois éléments « arc - attaches - setup de référence » réalisés virtuellement. Toutes les imprécisions liées au passage du virtuel au réel de chacun de ces trois éléments sont compensées lors de leur assemblage physique par les coussins de matériau de comblement, assurant ainsi une association physique parfaitement juste des trois éléments clés de l'appareil lingual.

Par ce nouveau procédé, lorsque l'appareil est reçu par le praticien, il n'existe plus d'informations théoriques virtuelles : tous les éléments (arc - attaches - setup de référence) ont déjà été assemblés physiquement, validant la faisabilité clinique du résultat et apportant ainsi une grande fiabilité.

Ainsi, contrairement aux autres procédés, l'appareil n'est plus un appareil imaginé de manière virtuelle puis livré au praticien qui a des difficultés à faire coïncider la conception virtuelle avec la réalité clinique.

Ce procédé de conception et de fabrication permet donc de s'affranchir de la réalisation d'attaches personnalisées, sans incidence sur la qualité du traitement.

Ce résultat va à l'encontre des pratiques actuelles, lesquelles ont, au contraire, laissé penser qu'il était indispensable de personnaliser les attaches pour améliorer les résultats obtenus sur un patient.

C'est un autre avantage apporté par l'invention.

De plus, dans la mesure où le praticien dispose du dessin de l'arc dont la forme est simple, il peut, à tout moment du traitement, réaliser un fil adapté au patient, en étant totalement indépendant d'un prestataire extérieur.

Ceci constitue encore un autre avantage de l'invention.

Au cours du traitement, l'appareil peut se détériorer lorsqu'une attache se détache de la dent du patient ou que le fil se casse.

Pour réparer l'appareil, le praticien procède de la façon suivante.

Si une attache est perdue, il utilise l'arc métallique 4' et la modélisation prévisionnelle de référence 5' précédemment créés et fabriqués pour le patient.

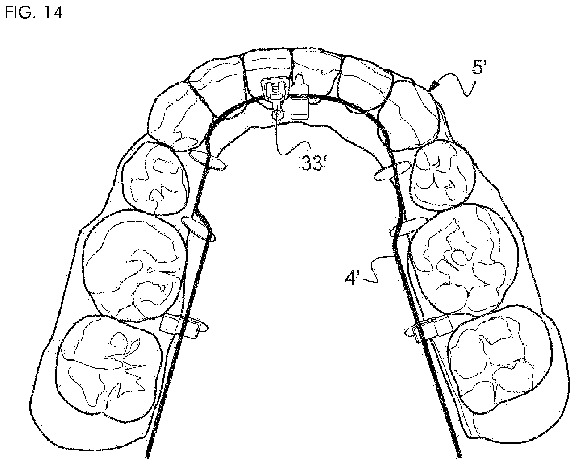

II place sur l'arc 4' une nouvelle attache standard 33', correspondant à celle perdue, puis l'arc muni de cette nouvelle attache sur la modélisation prévisionnelle de référence 5', comme le montre la figure 14.

L'espace créé entre la dent et l'attache sera le même que lors de la conception de l'appareil, puisque l'arc est positionné de la même façon grâce à la présence des guides.

Le praticien ajuste la position de l'attache face à la dent, met le matériau de comblement entre l'attache et la dent correspondante puis il transfère l'attache dans la bouche du patient, en suivant les mêmes étapes que celles illustrées sur les figures 10 à 13.

Cette attache prendra donc exactement la place de l'attache perdue et la réparation permettra de poursuivre le traitement comme si aucune attache n'avait été perdue.

Si le fil est cassé, le praticien le recrée grâce au dessin de l'arc 4 ou 4' et le replace dans la bouche, là encore sans incidence sur le traitement.

Dans tous les cas, grâce à la conception préalable de l'arc et de la modélisation prévisionnelle de référence, le praticien peut effectuer toute réparation de l'appareil lingual en étant totalement indépendant d'un prestataire extérieur.

Ceci permet de réduire considérablement les coûts et les délais d'attente puisque des attaches standards continuent d'être utilisées et aucun prestataire extérieur n'est sollicité.

C'est encore un autre avantage obtenu grâce à l'invention.

Un avantage supplémentaire est la conservation de l'intégrité de l'arc 4' qui sert à la réalisation physique de l'appareil lingual. Ainsi, il peut être utilisé en fin de traitement en clinique. C'est un avantage essentiel, car il permet au praticien de retrouver la configuration identique à celle du montage de l'appareil lingual : ce sont les attaches et l'arc qui ont servi au montage qui se retrouvent finalement réunis à la fin du traitement pour permettre l'expression de l'intégralité des informations qui ont été construites virtuellement puis physiquement lors de la phase de conception.

L'invention n'est pas limitée aux modes de réalisation plus particulièrement décrits. Elle en embrasse au contraire toutes les variantes et notamment celles où l'arc a une forme d'arc droit sans aucun pliage, ou celles où l'arc a une forme d'arc champignon segmenté semblable à l'arc 4 de la figure 7, mais dont la zone antérieure 40 est arrondie non de manière courbe, mais de manière segmentée, avec un segment correspondant à une dent et son attache. Ces deux formes simples peuvent également être données manuellement à un fil métallique par le praticien et d'éviter d'avoir recours à l'utilisation coûteuse d'un robot et de sa programmation.

L'invention permet également de travailler avec tout type d'attaches.

Ainsi, l'invention permet d'utiliser des attaches conventionnelles avec des ligatures ou des attaches autoligaturantes.

Également, le procédé de montage de l'invention permet d'utiliser des attaches quelles que soient la forme de leur gorge, rectangulaire ou carrée, et les dimensions de leur gorge, 0,045 x 0,063 cm (0,018x0,025 inch ou pouce), 0,050 x 0,050 cm (0,020 x 0,020 inch ou pouce), 0,040 x 0,040 cm (0,016x0,016 inch ou pouce), 0,045 x 0,045 cm (0,018x0,018 inch ou pouce),0,055 x 0,071 cm (0,022 x 0,028 inch ou pouce) ou 0,043 x 0,063 cm (0,017x0,025 inch ou pouce) ou toute autre dimension.

En outre, le procédé de montage de l'invention permet d'utiliser des attaches, quel que soit leur design. Par exemple, les gorges peuvent être à insertion horizontale ou verticale. Également, le fil utilisé peut être plié sur le petit côté en edgewise ou sur le grand côté en ribbonwise selon le design des attaches.

## Revendications

1. Procédé de conception virtuelle par ordinateur d'un appareil d'orthodontie linguale comprenant un arc muni d'au moins une attache et qui est destiné à un patient, comprenant les étapes suivantes :
- Obtenir une représentation (1) d'au moins une partie de la dentition du patient
- Réaliser une modélisation prévisionnelle virtuelle (2) à partir de cette représentation
- Pour chaque dent de ladite modélisation prévisionnelle virtuelle (2), sélectionner une attache standard virtuelle (30 à 33) et les positionner sur la modélisation prévisionnelle virtuelle
- Définir virtuellement sur ladite modélisation (2) la forme d'un arc dentaire orthodontique (4) adapté à la position desdites attaches une fois positionnées sur ladite modélisation
- Définir virtuellement sur ladite modélisation (2) au moins deux guides dudit arc, un guide antérieur de rétention sagittale (50) et un guide postérieur de rétention transversale (51,52), adaptés audit arc
- Réunir virtuellement ladite modélisation prévisionnelle (2) et lesdits guides en un seul objet virtuel formant une modélisation prévisionnelle de référence virtuelle (5).

2. Procédé selon la revendication 1, dans lequel la représentation d'au moins une partie de la dentition du patient est virtuelle.

3. Procédé selon l'une quelconque des revendications 1 ou 2, dans lequel ledit arc (4) est défini par segments d'au moins deux dents.

4. Procédé selon l'une quelconque des revendications 1 à 3, dans lequel est défini sur ladite modélisation (5) au moins un autre guide qui est un guide d'appui (53 à 56).

5. Procédé selon l'une des revendications 1 à 4, dans lequel ledit arc (4) et ladite modélisation de référence (5) virtuels sont stockés et/ou transmis sous forme de fichiers numériques.

6. Procédé de fabrication d'un appareil d'orthodontie linguale comprenant un arc dentaire orthodontique muni d'attaches standards, ledit procédé comprenant la mise en oeuvre d'un procédé de conception virtuelle selon l'une quelconque des revendications 1 à 5, et les étapes supplémentaires dans lesquelles :
- l'arc (4') est fabriqué à partir de sa définition virtuelle (4) en pliant un fil métallique
- les attaches standards (30' à 33') correspondant aux attaches virtuelles précédemment sélectionnées (30 à 33) sont fixées sur ledit arc (4')
- les données numériques représentant la modélisation de référence (5) sont exportées vers un système de fabrication pour obtenir une réalisation physique (5') de ladite modélisation de référence
- l'ensemble de l'arc et des attaches est placé sur la modélisation de référence physique et maintenu grâce aux dits au moins deux guides,
- un matériau de comblement est déposé entre chaque attache et la dent correspondante pour réaliser un coussin d'adaptation à la face linguale de chaque dent.

7. Procédé de fabrication selon la revendication 6, dans lequel, avant le dépôt du matériau de comblement, la position des attaches est ajustée pour définir un arc dentaire orthodontique adapté à ladite au moins une partie de la dentition du patient.

8. Modélisation prévisionnelle de référence virtuelle (5) destinée à la conception et/ou la réalisation d'un appareil d'orthodontie linguale pour un patient, où ladite modélisation peut être stockée dans la mémoire d'un ordinateur sous forme d'un fichier numérique de données, lequel est interprétable par une machine à commande numérique, comprenant un arc dentaire muni d'attaches, ladite modélisation étant obtenue par le procédé selon l'une des revendications 1 à 4, comprenant une modélisation prévisionnelle établie à partir de la représentation d'au moins une partie de la dentition du patient ainsi qu'au moins deux guides pour ledit arc, un guide antérieur de rétention sagittale (50) et un guide postérieur de rétention transversale (51,52), conçus pour assurer le blocage de l'arc dans un premier plan.

9. Modélisation prévisionnelle de référence selon la revendication 8, dans laquelle au moins un desdits guides est conçu pour assurer également le blocage de l'arc dans un deuxième plan perpendiculaire ou sensiblement perpendiculaire au premier.

10. Modélisation prévisionnelle de référence selon la revendication 8 ou 9, comprenant également au moins un guide d'appui (53 à 56).

11. Modélisation prévisionnelle de référence selon l'une quelconque des revendications 8 à 10, dans laquelle ledit au moins un guide postérieur de rétention transversale (51,52) comporte une fente (511) de blocage en position transversale et verticale.

12. Fichier numérique de données correspondant à une modélisation prévisionnelle de référence (5) selon l'une quelconque des revendications 8 à 11.

13. Modélisation prévisionnelle de référence (5') physique réalisée à partir du fichier numérique selon la revendication 12.

14. Ensemble comprenant un arc dentaire orthodontique virtuel et une modélisation prévisionnelle de référence virtuelle selon l'une quelconque des revendications 8 à 11, dont les guides sont adaptés audit arc dentaire.

15. Procédé de réparation d'un appareil d'orthodontie linguale dans lequel au moins une attache est manquante, comprenant les étapes suivantes :
- Obtenir une réalisation physique d'un ensemble selon la revendication 14 correspondant audit appareil, ledit ensemble comprenant un arc dentaire orthodontique et une modélisation prévisionnelle de référence
- Placer sur ledit arc (4') la ou les attaches standards manquantes
- Placer l'arc muni de la ou des attaches sur ladite modélisation de référence
- Déposer un matériau de comblement entre chaque attache et la dent correspondante pour réaliser un coussin d'adaptation à la face linguale de chaque dent.

## Patentansprüche

1. Verfahren zur computergestützten virtuellen Planung einer lingualen kieferorthopädischen Apparatur mit einem Bogen, welcher mit mindestens einer Klammer versehen und für einen Patienten bestimmt ist, folgende Schritte umfassend:
- Erstellung einer Darstellung (1) von mindestens einem Teil des Gebisses des Patienten;
- Ausführung einer virtuellen prognostischen Modellierung (2) anhand der Darstellung;
- Auswählen einer virtuellen Standardklammer (30 bis 33) für jeden Zahn der virtuellen prognostischen Modellierung (2) und Positionierung dieser auf der virtuellen prognostischen Modellierung;
- virtuelle Bestimmung der Form eines kieferorthopädischen Zahnbogens (4), der an die Position der Klammer angepasst ist, wenn diese auf der Modellierung positioniert sind, auf der Modellierung (2);
- virtuelle Bestimmung von mindestens zwei Führungen des Bogens, von einer vorderen Führung zur sagittalen Retention (50) und einer hinteren Führung zur transversalen Retention (51, 52), die an den Bogen angepasst sind, auf der Modellierung (2) ;
- virtuelle Zusammenführung der prognostischen Modellierung (2) und der Führungen in einem einzigen virtuellen Objekt, welches eine virtuelle prognostische Referenzmodellierung (5) bildet.

2. Verfahren nach Anspruch 1,
wobei die Darstellung von mindestens einem Teil des Gebisses des Patienten virtuell ist.

3. Verfahren nach einem der Ansprüche 1 bis 2,
wobei der Bogen (4) durch Segmente von mindestens zwei Zähnen bestimmt wird.

4. Verfahren nach einem der Ansprüche 1 bis 3,
wobei auf der Modellierung (5) mindestens eine weitere Führung bestimmt wird, die eine Stützführung (53 bis 56) ist.

5. Verfahren nach einem der Ansprüche 1 bis 4,
wobei der virtuelle Bogen (4) und die virtuelle Referenzmodellierung (5) als numerische Dateien gespeichert und/oder übertragen werden.

6. Verfahren zur Herstellung einer lingualen kieferorthopädischen Apparatur mit einem kieferorthopädischen Bogen mit Standardklammern,
wobei das Verfahren den Einsatz eines virtuellen Planungsverfahrens nach einem der Ansprüche1 bis 5 und die zusätzlichen Schritte umfasst, in welchen:
- der Bogen (4') anhand seiner virtuellen Bestimmung (4) dadurch hergestellt wird, dass ein Metalldraht gebogen wird;
- die Standardklammern (30' bis 33'), die den zuvor ausgewählten, virtuellen Klammern (30 bis 33) entsprechen, auf dem Bogen (4') befestigt werden;
- die der Referenzmodellierung (5) entsprechenden numerischen Daten zu einem Herstellungssystem übertragen werden, um die physische Ausführung (5') der Referenzmodellierung auszuführen;
- die Anordnung mit dem Bogen und den Klammern auf der physischen Referenzmodellierung positioniert und mittels den mindestens zwei Führungen festgehalten wird;
- ein Füllmaterial zwischen jeder Klammer und dem entsprechenden Zahn zur Herstellung eines Anpassungskissens an die linguale Seite jedes Zahns aufgetragen wird.

7. Herstellungsverfahren nach Anspruch 6,
wobei vor dem Auftragen des Füllstoffs die Position der Klammer eingestellt wird, um einen kieferorthopädischen Zahnbogen zu bestimmen, welcher dem wenigstens einen Teil des Gebisses des Patienten angepasst ist.

8. Prognostische virtuelle Referenzmodellierung (5) zur Planung und/oder Ausführung einer lingualen kieferorthopädischen Apparatur für einen Patienten, mit einem mit Klammern versehenen Zahnbogen,
wobei die erwähnte Modellierung in einem Speicher eines Computers in Form einer digitalen Datendatei abgelegt werden kann, die von einer nummerisch gesteuerten Maschine interpretierbar ist,
wobei die Modellierung durch ein Verfahren nach einem der Ansprüche 1 bis 4 geschaffen wird und
wobei die Modellierung eine prognostische Modellierung umfasst, die anhand der Darstellung von mindestens einem Teil des Gebisses des Patienten erstellt wird, sowie mit mindestens zwei Führungen für den Bogen, einer vorderen Führung zur sagittalen Retention (50) und einer hinteren Führung zur transversalen Retention (51, 52), welche zur Arretierung des ersten Bogens in einer ersten Ebene ausgebildet sind.

9. Prognostische Referenzmodellierung nach Anspruch 8, wobei mindestens eine der Führungen ebenfalls zur Arretierung des Bogens in einer zweiten Ebene senkrecht oder im Wesentlichen senkrecht zur ersten Ebene ausgebildet ist.

10. Prognostische Referenzmodellierung nach Anspruch 8 oder 9, mit ebenfalls mindestens einer Stützführung (53 bis 56).

11. Prognostische Referenzmodellierung nach einem der Ansprüche 8 bis 10,
wobei die mindestens eine hintere Führung zur transversalen Retention (51, 52) einen Spalt (511) zur Arretierung in transversaler und vertikaler Position umfasst.

12. Digitale Datendatei, die einer prognostischen Referenzmodellierung (5) nach einem der Ansprüche 8 bis 11 entspricht.

13. Physische prognostische Referenzmodellierung (5'), die anhand der digitalen Datendatei nach Anspruch 12 ausgeführt ist.

14. Anordnung mit einem kieferorthopädischen Zahnbogen und eine prognostische virtuelle Referenzmodellierung nach einem der Ansprüche 8 bis 11, deren Führungen an den Zahnbogen angepasst sind.

15. Verfahren zur Reparatur einer lingualen kieferorthopädischen Apparatur, in welcher mindestens eine Klammer fehlt, folgende Schritte umfassend:
- Erstellung einer physischen Ausführung einer der Apparatur entsprechenden Anordnung nach Anspruch 14,
- wobei die Anordnung einen kieferorthopädischen Zahnbogen und eine prognostische Referenzmodellierung umfasst;
- Positionierung der einen oder der mehreren fehlenden Standardklammer auf dem Bogen (4');
- Positionierung des Bogens mit der oder den fehlenden Klammern auf der Referenzmodellierung;
- Auftragen eines Füllstoffs zwischen jeder Klammer und dem entsprechenden Zahn zur Herstellung eines Anpassungskissens an die linguale Seite jedes Zahns.

## Claims

1. Method for virtual design by computer of a lingual orthodontics appliance comprising an arch provided with at least one attachment and which is intended for a patient, comprising the following steps:
- obtaining a representation (1) of at least a part of the dentition of the patient
- producing a virtual predictive modelling (2) from this representation
- for each tooth of said virtual predictive modelling (2), selecting a virtual standard attachment (30 to 33) and positioning them on the virtual predictive modelling
- defining virtually, on said modelling (2), the form of an orthodontic dental arch (4) suited to the position of said attachments once positioned on said modelling
- defining virtually, on said modelling (2), at least two guides of said arch, an anterior sagittal retention guide (50) and a posterior transverse retention guide (51, 52), suited to said arch
- virtually combining said predictive modelling (2) and said guides in a single virtual object forming a virtual reference predictive modelling (5).

2. Method according to Claim 1, wherein the representation of at least a part of the dentition of the patient is virtual.

3. Method according to either one of Claims 1 and 2, wherein said arch (4) is defined by segments of at least two teeth.

4. Method according to any one of Claims 1 to 3, wherein at least one other guide which is a support guide (53 to 56) is defined on said modelling (5).

5. Method according to any one of Claims 1 to 4, wherein said virtual arch (4) and said virtual reference modelling (5) are stored and/or transmitted in digital file form.

6. Method for manufacturing a lingual orthodontics appliance comprising an orthodontic dental arch provided with standard attachments, said method comprising the implementation of a virtual design method according to any one of Claims 1 to 5, and the additional steps in which:
- the arch (4') is manufactured from its virtual definition (4) by folding a metal wire
- the standard attachments (30' to 33') corresponding to the virtual attachments previously selected (30 to 33) are fixed onto said arch (4')
- the digital data representing the reference modelling (5) are exported to a manufacturing system to obtain a physical realisation (5') of said reference modelling
- the set of the arch and of the attachments is placed on the physical reference modelling and held using said at least two guides,
- a filler material is deposited between each attachment and the corresponding tooth to produce a cushion matching the lingual face of each tooth.

7. Manufacturing method according to Claim 6, wherein, prior to the deposition of the filler material, the position of the attachments is adjusted to define an orthodontic dental arch suited to said at least a part of the dentition of the patient.

8. Virtual reference predictive modelling (5) intended for the design and/or the production of a lingual orthodontics appliance for a patient, comprising a dental arch provided with attachments, in which said modelling can be stored in the memory of a computer in the form of a digital data file, which is interpretable by a numerically controlled machine, said modelling being obtained by the method according to one of Claims 1 to 4, comprising a predictive modelling established from the representation of at least a part of the dentition of the patient and at least two guides for said arch, an anterior sagittal retention guide (50) and a posterior transverse retention guide (51, 52), designed to ensure the immobilising of the arch in a first plane.

9. Reference predictive modelling according to Claim 8, wherein at least one of said guides is designed to also ensure the immobilising of the arch in a second plane at right angles or substantially at right angles to the first.

10. Reference predictive modelling according to Claim 8 or 9, also comprising at least one support guide (53 to 56).

11. Reference predictive modelling according to any one of Claims 8 to 10, wherein said at least one posterior transverse retention guide (51, 52) comprises a transverse and vertical position immobilising slit (511) .

12. Digital data file corresponding to a reference predictive modelling (5) according to any one of Claims 8 to 11.

13. Physical reference predictive modelling (5') produced from the digital file according to Claim 12.

14. Set comprising a virtual orthodontic dental arch and a virtual reference predictive modelling according to any one of Claims 8 to 11, the guides of which are suited to said dental arch.

15. Method for repairing a lingual orthodontics appliance in which at least one attachment is missing, comprising the following steps:
- obtaining a physical realisation of a set according to Claim 14 corresponding to said appliance, said set comprising an orthodontic dental arch and a reference predictive modelling
- placing on said arch (4') the missing standard attachment or attachments
- placing the arch provided with the attachment or attachments on said reference modelling
- depositing a filler material between each attachment and the corresponding tooth to produce a cushion matching the lingual face of each tooth.
